# EUROPÄISCHE PATENTANMELDUNG

(11) **EP 1 283 332 A2**
(43) Veröffentlichungstag der Anmeldung: **12.02.2003**
(21) Anmeldenummer: 02013210.6
(22) Anmeldetag: 15.06.2002
(51) Int. Cl.: F01N 3/20

(54) **Abgasbehandlungseinheit und Messvorrichtung zur Ermittlung einer Konzentration einer Harnstoff-Wasser-Lösung**

(30) Priorität: 09.08.2001 DE 10139142
(71) Anmelder: ROBERT BOSCH GMBH, 70442 Stuttgart (DE)
(72) Erfinder: Scheying, Gerd, Dr., 70186 Stuttgart (DE)

(57) **Zusammenfassung**

Es wird eine Abgasbehandlungseinheit zur Umsetzung, insbesondere zur Reduzierung von Stickoxidverbindungen, eines Abgasstromes (1) einer Verbrennungseinrichtung, insbesondere einer Diesel-Brennkraftmaschine, mit einer Speichereinheit (6) zur Speicherung einer Harnstoff-Wasser-Lösung (5) und einer Dosiereinheit (7, 8,9,10,11, 12, 13, 15) zur Dosierung der Harnstoff-Wasser-Lösung (5) in den Abgasstrom (1) bzw. eine Messvorrichtung zur Ermittlung einer Konzentration einer Harnstoff-Wasser-Lösung (5) in einer Speichereinheit (6) mit einer elektronischen Auswerteeinheit (15) vorgeschlagen, mit der bzw. denen die Konzentration der Harnstoff-Wasser-Lösung (5) ohne großen Aufwand und wirtschaftlich günstig ermittelt werden kann, so dass eine exakte Harnstoffdosierung in den Abgasstrom (1) realisierbar ist. Dies wird erfindungsgemäß dadurch erreicht, dass bei der Abgasbehandlungseinheit wenigstens eine Messvorrichtung zur Ermittlung einer Konzentration der Harnstoff-Wasser-Lösung (5) in der Speichereinheit (6) mit einer elektronischen Auswerteeinheit (15) vorgesehen ist bzw. dass die Speichereinheit (6) der Messvorrichtung wenigstens einen Drucksensor (14) zur Ermittlung eines Drucks umfasst.

## Beschreibung

Die Erfindung betrifft eine Abgasbehandlungseinheit zur Umsetzung eines Abgasstromes einer Verbrennungseinrichtung sowie eine Messvorrichtung zur Ermittlung einer Konzentration einer Harnstoff-Wasser-Lösung in einer Speichereinheit nach den Oberbegriffen der Ansprüche 1 bzw. 11.

### Stand der Technik

Besonders im Zusammenhang mit künftigen gesetzlichen Vorgaben bezüglich der Stickoxidemissionen von Kraftfahrzeugen ist eine entsprechende Abgasbehandlung unumgänglich. Zur Verringerung der NOₓ-Emissionen von Verbrennungsmotoren, z.B. neben Benzinmotoren vor allem von Dieselmotoren, soll u.a. das sogenannte Selective-Catalytic-Reduction (SCR)-Verfahren eingesetzt werden. Hierbei wird dem Abgasstrang eine definierte Menge des Reduktionsmittels Harnstoff bzw. Harnstoff-Wasser-Lösung (HWL) zugegeben (vgl. WEISSWEILER in CIT (72), 441-449, 2000).

Für den stöchiometrischen Umsatz des aus Harnstoff (Urea; (NH₂)₂CO) im Abgasstrang generierten Ammoniak (NH₃) mit den im Abgas vorhandenen Stickoxiden (NOₓ) wird die HWL in den Abgasstrang des Verbrennungsmotors zudosiert. Das heißt, dass in einer ersten Reaktionsstufe, insbesondere im Abgasstrang der in der HWL enthaltene Harnstoff mit Wasser zu Ammoniak und Kohlendioxid hydrolysiert wird. In einer zweiten Reaktionsstufe reduziert das Ammoniak die im Abgasstrang enthaltenen Stickoxide zu Stickstoff, wobei als Nebenprodukt Wasser erzeugt wird, gemäß der Gesamt-Reaktion:

NO + NO₂ + 2NH₃ → 2N₂ + 3H₂O.

Bei derzeitigen Abgasnachbehandlungssystemen zur NOₓ-Reduzierung ist jedoch nachteilig, dass sich Harnstoff in der HWL in Abhängigkeit der Temperatur selbsttätig zu Ammoniak (NH₃) und Kohlendioxid (CO₂) zersetzt, wodurch sich die Ureakonzentration der HWL verringert. Demzufolge kann eine exakte Dosierung der über vergleichsweise lange Zeiträume gespeicherten HWL in den Abgasstrom zur stöchiometrischen Umsetzung des Harnstoffs nicht gewährleistet werden. Bei verringerter Ureakonzentration in der HWL wird entsprechend weniger NOₓ im Abgas umgesetzt, da das Zersetzungsprodukt NH₃ aus der HWL im Tank entweicht. Dadurch können unerwünscht hohe NOₓ-Konzentrationen emittiert werden.

Gegebenenfalls wäre eine Überdosierung von HWL in das Abgas zur Verhinderung unerwünscht hoher NOₓ-Emissionen denkbar. Nachteilig bei dieser Variante ist jedoch der dann unter Umständen auftretende Ammoniakschlupf, d.h. die Emission von nicht umgesetztem, giftigem Ammoniak.

### Aufgabe und Vorteile der Erfindung

Aufgabe der Erfindung ist es demgegenüber, eine Abgasbehandlungseinheit zur Umsetzung eines Abgasstromes einer Verbrennungseinrichtung bzw. eine Messvorrichtung zur Ermittlung einer Konzentration einer Harnstoff-Wasser-Lösung vorzuschlagen, mit der bzw. denen die Konzentration der Harnstoff-Wasser-Lösung ohne großen Aufwand und wirtschaftlich günstig ermittelt werden kann, so dass eine exakte Harnstoffdosierung in den Abgasstrom realisierbar ist.

Diese Aufgabe wird, ausgehend von einer Abgasbehandlungseinheit bzw. einer Messvorrichtung der einleitend genannten Art, durch die kennzeichnenden Merkmale der Ansprüche 1 bzw. 11 gelöst.

Durch die in den Unteransprüchen genannten Maßnahmen sind vorteilhafte Ausführungen und Weiterbildungen der Erfindung möglich.

Dementsprechend zeichnet sich die Erfindung dadurch aus, dass bei der Abgasbehandlungseinheit wenigstens eine Messvorrichtung zur Ermittlung einer Konzentration der Harnstoff-Wasser-Lösung in der Speichereinheit mit einer elektronischen Auswerteeinheit vorgesehen ist bzw. dass die Speichereinheit der Messvorrichtung wenigstens einen Drucksensor zur Ermittlung eines Drucks umfasst.

Gemäß der Erfindung kann die Konzentration der Harnstoff-Wasser-Lösung ohne vergleichsweise großen Aufwand ermittelt werden, wodurch eine nahezu exakte Dosierung des Harnstoffs in den Abgasstrom realisierbar ist und somit nachteilig hohe NOₓ- bzw. Ammoniak-Emissionen entsprechender Verbrennungseinrichtungen bzw. Fahrzeuge weitestgehend vermieden werden können.

Generell können zur stöchiometrischen Umsetzung der HWL mit dem Abgasstrom die NOₓ-Emissionen in vorteilhafter Weise ermittelt werden. Beispielsweise mittels eines möglicherweise bereits vorhandenen Management-Systems, wobei unterschiedlichen Betriebszuständen der Verbrennungseinheit jeweils entsprechende NOₓ-Emissionen zugeordnet werden.

Gegebenenfalls kann alternativ oder in Kombination hierzu wenigstens ein Abgassensor unter anderem mit Hilfe der Auswerteeinheit insbesondere die NOₓ-Konzentration des Abgasstromes ermitteln.

Mit Hilfe des erfindungsgemäßen Drucksensors wird ein indirektes Messverfahren zur Ermittlung der Konzentration der Harnstoff-Wasser-Lösung in der Speichereinheit umgesetzt. In vorteilhafter Weise ermittelt die Auswerteeinheit mittels dem Drucksensor den Dampfdruck des in der nahezu gasdichten Speichereinheit aufgrund der Hydrolyse des Harnstoffs erzeugten Ammoniaks plus dem Dampfdruck des Lösungsmittels Wasser, so dass die Auswerteeinheit die entsprechend verringerte Harnstoffmenge bzw. -konzentration in der HWL ermitteln kann.

Derzeit bereits bekannte Messverfahren zur Ermittlung einer Konzentration einer Harnstoff-Wasser-Lösung werden mittels aufwendiger Laboranalytik bzw. entsprechender Vorrichtungen realisiert, die insbesondere für den Einsatz in Fahrzeuganwendungen sowohl aufgrund verfahrenstechnischer als auch wirtschaftlicher Rahmenbedingungen nicht realisierbar sind.

Vorzugsweise werden handelsübliche Drucksensoren verwendet, wodurch eine wirtschaftlich besonders günstige Realisierung der Erfindung möglich ist. Vor allem eine-entsprechend wirtschaftlich günstige und verfahrenstechnisch relativ einfach zu realisierende Ermittlung der HWL-Konzentration ermöglicht die Anwendung entsprechender Messvorrichtungen in Abgasbehandlungseinheiten, insbesondere für Fahrzeuge wie z.B. Diesellastkraftwagen oder Personenkraftwagen. Aufgrund derzeitig bereits bekannter, künftig verbindlicher, gesetzlicher Vorschriften ist der Einsatz erfindungsgemäßer Messvorrichtungen vor allem für die Abgasbehandlung von Kraft-Fahrzeugen mit Dieselmotoren vorzusehen.

Grundsätzlich kann jedoch eine erfindungsgemäße Messvorrichtung auch bei der Abgasbehandlung von anderen Verbrennungseinrichtungen wie Otto-Motoren oder dergleichen zur Umsetzung bzw. Reduzierung der in den entsprechenden Abgasen enthaltenen Stickoxidverbindungen verwendet werden, was bei einer entsprechenden Verschärfung gesetzlicher Vorschriften gegebenenfalls notwendig werden könnte.

In einer besonderen Weiterbildung der Erfindung umfasst die Auswerteeinheit wenigstens einen Temperatursensor zur Ermittlung einer Temperatur insbesondere der Harnstoff-Wasser-Lösung. Vor allem im Bereich zwischen -11° und +90°C korrespondiert zu jeder Temperatur eine bestimmte Menge sich in der HWL zersetzender Urea, so dass mittels dem Temperatursensor und der Auswerteeinheit die entsprechend umgesetzte Menge ermittelt werden kann und hierdurch die Konzentration der HWL vergleichsweise genau ermittelbar ist.

Darüber hinaus kann mittels dem Temperatursensor in vorteilhafter Weise die Abhängigkeit des Drucks in der Speichereinheit von der aktuellen Temperatur berücksichtigt und somit bei der Ermittlung der HWL-Konzentration einbezogen werden. Folglich können beispielsweise Druckänderungen, die aufgrund von äußeren Temperaturschwankungen hervorgerufen werden, entsprechend berücksichtigt bzw. dieser Ursache - zugeordnet werden. Diese Maßnahme verbessert zusätzlich die Genauigkeit der HWL-Konzentrationsbestimmung und somit die HWL-Dosierung in den Abgasstrom. Gegebenenfalls kann wenigstens ein weiterer, separater Temperatursensor zur Ermittlung der Umgebungstemperatur der Speichereinheit von Vorteil sein.

Vorzugsweise wird als Temperatursensor ein handelsübliches Standardelement verwendet. Gegebenenfalls können auch als eine Baueinheit realisierte, bereits handelsübliche kombinierte Druck-Temperatur-Sensoren gemäß der Erfindung Anwendung finden. Diese Maßnahmen ermöglichen eine besonders wirtschaftlich günstige Ausführungsform.

Vorteilhafterweise umfasst die Auswerteeinheit wenigstens ein Zeitmesselement zur Messung der Zeit. Hiermit wird gewährleistet, dass in Abhängigkeit der Zeit vor allem die Druckänderung bzw. Zersetzung des Harnstoffs der HWL ermittelbar ist. In vorteilhafter Weise wird als Zeitmesselement auf handelsübliche Komponenten zurückgegriffen bzw. wird eine entsprechende Komponente in einer bereits vorhandenen Elektronikeinheit der Auswerteeinheit verwendet, wie z.B. eines entsprechenden Chips oder dergleichen.

Vorzugsweise kann mittels der Druckänderung bzw. dem Druckanstieg über der Zeit u.a. die tatsächliche Ausgangskonzentration, d.h. die HWL-Konzentration unmittelbar nach dem Betanken der Speichereinheit, bzw. die aktuell vorhandene HWL-Konzentration ermittelt werden. In vorteilhafter Weise kann gemäß der Erfindung auch detektiert werden, ob es sich bei der in der Speichereinheit befindlichen Lösung um eine HWL handelt oder ob sich keine HWL, z.B. nahezu reines Wasser, in der Speichereinheit befindet. Beispielsweise kann mittels dem ermittelten Druckanstieg in der Speichereinheit nach ca. 1 Stunde bei Temperaturen von ca. 40°C eine HWL gegenüber nahezu reinem Wasser unterschieden werden.

Im Allgemeinen weist die "frische" HWL eine eutektische Konzentration von 32,5 % auf. Jedoch kann auch bereits teilweise zersetzte HWL mit unbekannter, geringerer Konzentration in die Speichereinheit eingefüllt bzw. getankt und gegebenenfalls mit einer bereits zersetzten HWL vermischt werden.

Die Zersetzung der HWL in Ammoniak und Kohlendioxid äußert sich, wie bereits erwähnt, durch einen Druckanstieg in der nahezu gasdichten HWL-Speichereinheit. Da jedoch ein Teil des entstehenden Ammoniaks im Wasser solvatisiert wird, d.h. es wird NH₃(aq) gebildet, ein Teil sich im Wasser umsetzt, beispielsweise zu NH₄OH, und sich der im Wasser gelöste Kohlendioxidanteil auf das Ammoniakabsorptionsverhalten des Wassers auswirkt, weist in einer vorteilhaften Variante der Erfindung die Auswerteeinheit wenigstens eine elektronisch abgespeicherte Kennlinie von Temperatur-, Druck- und/oder Zeitparametern auf. Entsprechende Kennlinien werden vorzugsweise der Konzentrations-Ermittlung mittels der Auswerteeinheit zugrunde gelegt.

In einer vorteilhaften Ausführungsform der Erfindung umfasst die Auswerteeinheit wenigstens ein an einem Ausströmelement, insbesondere Auslassrohr bzw. -leitung, der Speichereinheit angeordnetes Volumenmesselement zur Volumenmessung der aus der Speichereinheit ausströmenden bzw. entfernten Harnstoff-Wasser-Lösung. Hiermit wird ermöglicht, dass die aus der Speichereinheit entnommene HWL-Menge bestimmbar wird, so dass der hierdurch hervorgerufene Druckabfall in der Speichereinheit ermittelt und unter anderem mittels der Auswerteeinheit in vorteilhafter Weise zur Bestimmung der HWL-Konzentration in der Speichereinheit verwendet werden kann.

Gegebenenfalls kann das Volumenmesselement als Dosierventil oder dergleichen ausgebildet werden. Beispielsweise mittels einer Pumpe kann das Dosierventil mit nahezu konstantem Druck beaufschlagt werden und durch Detektierung der Öffnungszeit des Dosierventils mittels dem Zeitmesselement ist die nahezu exakte Ermittlung des aus der Speichereinheit entnommenen Volumens realisierbar.

Vorzugsweise wird das Volumenmesselement auch zur weitestgehend exakten Dosierung der Harnstoff-Wasser-Lösung für die stöchiometrische Umsetzung mit dem Abgasstrom verwendet. Hierdurch wird der konstruktive Aufwand entsprechender Abgasbehandlungseinheiten zusätzlich verringert.

Vorteilhafterweise weist die Speichereinheit wenigstens eine regelbare, verschließbare Öffnung zum Druckausgleich auf. Hiermit wird gewährleistet, dass kein unzulässiger Druck, sowohl Überdruck als auch Unterdruck, in der Speichereinheit aufgrund der HWL-Zersetzung bzw. Ammoniakerzeugung, Temperaturänderung und/oder der HWL-Entnahme erzeugt werden kann.

Vorzugsweise ermittelt das Zeitmesselement wenigstens eine Dauer einer Öffnungsphase der Öffnung, so dass insbesondere im Zusammenwirken mit dem Drucksensor die Auswerteeinheit vor allem die ausströmende bzw. einströmende Ammoniakmenge ermittelt. Vorteilhafterweise ist die Öffnung im oberen Bereich der Speichereinheit angeordnet, so dass vor allem gasförmiges Ammoniak ausströmen und/oder atmosphärische Luft einströmen kann.

In einer besonderen Variante der Erfindung umfasst die Öffnung wenigstens ein Überdruck- und/oder Unterdruckventil, gegebenenfalls ein sogenanntes Kombi-Ventil, zum Druckausgleich der HWL-Speichereinheit. Vorteilhafterweise kann mittels entsprechender Ventile der Druck der Speichereinheit in vorgegebenen Grenzen gehalten werden, so dass in bevorzugter Weise die Speichereinheit nicht als Druckbehälter auszuführen ist. Beispielsweise wird als maximaler Überdruck ca. 100 mbar bis 2 bar und als maximaler Unterdruck ca. 20 bis 100 mbar vorgegeben. Dementsprechend können möglicherweise nachteilig hohe wirtschaftliche Kosten für ansonsten zu verwendende Druckspeicher entfallen.

In einer besonderen Weiterbildung der Erfindung weist die Speichereinheit wenigstens einen Füllstandsensor zur Ermittlung einer Füllhöhe auf. Hiermit wird ermöglicht, dass die in der Speichereinheit befindliche HWL-Menge unabhängig vom Verbrauch bzw. von der entnommenen HWL-Menge detektierbar ist. Dies ist zur Bestimmung der in der Speichereinheit gespeicherten Menge, vor allem nach dem Befüllen bzw. Betanken dieser, von Vorteil.

Darüber hinaus kann insbesondere mittels dem Füllstandsensor ein Warnsignal bei weitgehend entleerter Speichereinheit für eine entsprechende Anzeigeeinheit erzeugt werden. Beispielsweise kann mittels einer entsprechenden Anzeige in einem Fahrzeug oder dergleichen die jeweilige Bedienperson darauf aufmerksam gemacht werden, dass die Speichereinheit mit Harnstoff-Wasser-Lösung wieder zu befüllen ist.

Vorzugsweise können als Füllstandsensoren herkömmliche Standardelemente verwendet werden. Alternativ hierzu ist wenigstens der Drucksensor als Füllstandsensor ausgebildet, wodurch in vorteilhafter Weise eine konstruktiv und wirtschaftlich günstige Ausführungsform der Erfindung realisiert werden kann. Vorteilhafterweise ist der entsprechend ausgebildete Drucksensor im unteren Bereich der Speichereinheit angeordnet, so dass mittels dem hydrostatischen Druck der HWL die Füllstandshöhe ermittelt werden kann.

In einer vorteilhaften Variante der Erfindung ist bei einer Abgasbehandlungseinheit wenigstens an der regelbaren, verschließbaren Öffnung der Speichereinheit ein Durchströmelement, insbesondere ein Rohrelement, eine Verbindungsleitung oder dergleichen, zum Zuführen eines gasförmigen Fluids, insbesondere des Ammoniaks, zum Abgasstrom angeordnet. Mit Hilfe dieser Maßnahme wird ermöglicht, dass das erzeugte, giftige Ammoniak zur Reduzierung der Stickoxidverbindungen des Abgasstromes der Verbrennungseinrichtung verwendet werden kann.

Grundsätzlich kann mittels der Messvorrichtung gemäß der Erfindung aus dem aktuellen Druck der Speichereinheit bei gegebener Temperatur die Konzentration des Harnstoffs ermittelt werden, was insbesondere in Verbindung mit der Auswertung dieser Parameter mittels der Auswerteeinheit und gegebenenfalls in Wechselwirkung mit einer Steuer- bzw. Regelvorrichtung der Abgasbehandlungseinheit bzw. des Fahrzeuges eine wesentlich genauere Dosierung der HWL in den Abgasstrom gewährleistet.

### Ausführungsbeispiel

Ein Ausführungsbeispiel der Erfindung ist in der Zeichnung dargestellt und wird anhand der einzigen Figur näher erläutert.

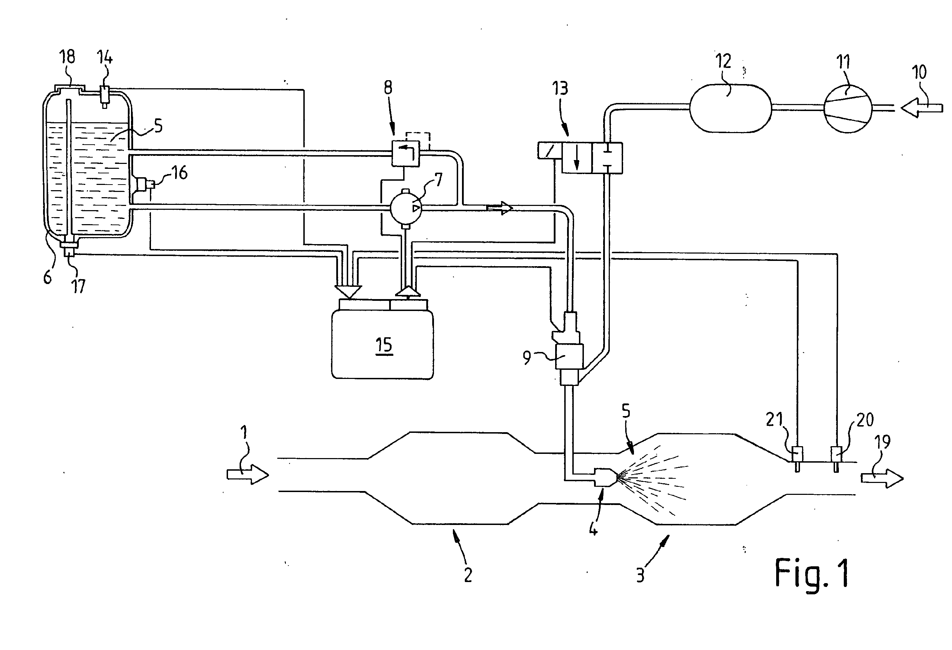

- Figur 1: zeigt eine Abgasbehandlungseinheit mit einer Messvorrichtung gemäß der Erfindung.

In Figur 1 ist eine Abgasbehandlungseinheit zur NOx-Reduzierung eines Rohabgasstroms 1 einer nicht näher dargestellten Verbrennungseinrichtung wie einer Diesel-, Benzin-Brennkraftmaschine oder dergleichen aufgeführt. Der Rohabgasstrom 1 wird optional in einem Oxidationskatalysator 2 vorbehandelt. Vorzugsweise in Strömungsrichtung hinter dem Oxidationskatalysator 2 wird mittels einer Düse 4 HWL 5 (Harnstoff-Wasser-Lösung) im Bereich eines SCR-Katalysators 3 (Selectiv-Catalytic-Reduction) weitgehend gleichmäßig verdüst.

In nicht näher dargestellter Weise wird im SCR-Katalysator 3 in einer ersten Reaktionsstufe der in der HWL 5 enthaltene Harnstoff ((NH₂)₂CO) mit Wasser (H₂O) zu Ammoniak (NH₃) und Kohlendioxid (CO₂) umgesetzt bzw. hydrolysiert. In einer zweiten Reaktionsstufe wird Ammoniak und insbesondere Stickstoffmonoxid (NO) sowie Stickstoffdioxid (NO₂) in Stickstoff (N₂) und Wasser umgesetzt.

Gemäß Figur 1 kann sowohl die Hydrolyse als auch die Reduktion in einer Baueinheit 3 erfolgen. Alternativ hierzu kann jedoch in nicht näher dargestellter Weise sowohl für die Hydrolyse als auch für die Reduktion jeweils eine separate, vorzugsweise katalytisch aktive Baueinheit vorgesehen werden.

Generell können in nicht näher dargestellter Weise auch weitere Komponenten wie (Dieselruß-) Partikelfilter oder dergleichen für die Abgasbehandlung des Rohabgasstromes 1 vorgesehen werden.

Zur stöchiometrischen Umsetzung der HWL 5 mit den NOₓ-Emissionen der Brennkraftmaschine wird die in einem Tank 6 gespeicherte HWL 5 mittels einer Pumpe 7 und einem Regelventil 8 einem Dosierventil 9 mit Druck, z.B. zwischen 20 bis 25 bar, zugeführt. Für die Eindüsung der HWL 5 wird zusätzlich vorzugsweise atmosphärischer Luftstrom 10 mittels einer Pumpe 11 und einem Druckspeicher 12 sowie einem Regelventil 13 dem Dosierventil 9 zugeführt. Die HWL-Lufteindüsung in den Abgasstrom 1 wird derart realisiert, dass eine weitgehend gleichmäßige Anströmung des SCR-Katalysators 3 erreicht wird. Gegebenenfalls können hierfür vorteilhafte Strömungselemente wie Umlenkbleche oder dergleichen im SCR-Katalysator 3 vorgesehen werden.

Für die Hydrolyse der HWL 5 ist insbesondere eine Mindestbetriebstemperatur von ca. 220° C vorzusehen, so dass auch unabhängig von der vorliegenden Erfindung zur Verbesserung vor allem des Kaltstartverhaltens und/oder anderer besonderer Betriebsphasen der Abgasbehandlungseinheit in nicht näher dargestellter Weise am SCR-Katalysator 3 eine Heizeinheit, eine Wärmetauschereinheit oder dergleichen angeordnet werden kann. Gegebenenfalls kann Abwärme aus einer exotherm arbeitenden Komponente der Abgasbehandlungseinheit bzw. Abwärme von der Brennkraftmaschine oder dergleichen und/oder eine elektrische bzw. katalytisch aktive Heizeinheit vorzugsweise zur Erwärmung des SCR-Katalysators 3 verwendet werden.

Gemäß der Erfindung ist die Urea- bzw. Harnstoffkonzentration der HWL 5 selektiv zu ermitteln. Im Bereich zwischen -11° und +90° C korrespondiert zu jeder Temperatur eine bestimmte Menge sich in der HWL 5 zersetzender Urea, so dass insbesondere über mehrere Stunden bzw. Tage die Konzentration der HWL 5 im Tank 6 entscheidend verändert bzw. verringert wird. Diese Zersetzung der HWL 5 in Ammoniak und Kohlendioxid bzw. die aktuelle HWL-Konzentration wird gemäß der Erfindung vor allem mittels einem Drucksensor 14 im Tank 6 ermittelt.

Vorzugsweise ist der Tank 6 mittels entsprechender Tankstutzen 18 bzw. Einlass- und Auslassöffnungen weitgehend gasdicht verschlossen. Der Druckanstieg im HWL-Tank 6 äußert sich durch den Dampfdruck des entstehenden Ammoniaks plus dem Dampfdruck des Lösungsmittels Wasser. Da ein Teil des entstehenden Ammoniaks im Wasser solvatisiert wird und ein Teil sich im Wasser z.B. zu NH₄OH umsetzt, ist eine einfache Rückrechnung auf die reduzierten Stickstoffkomponenten Urea und NH₃ lediglich eingeschränkt möglich.

Ferner wirkt sich der im Wasser gelöste CO₂-Gehalt auf das Ammoniakabsorptionsverhalten des Wassers aus. Aus diesen Gründen wird insbesondere in vorangehenden Versuchen ermittelt, welche Temperatur-Druck-Zeit-Tripel mit welcher Konzentration an Urea in der HWL 5 korrespondieren. Dies wird als Kennlinie bzw. Kennlinienfeld der Konzentrationsberechnung durch ein Steuergerät 15 zugrunde gelegt. Hierfür weist der Tank 6 zusätzlich einen Temperatursensor 16 auf und das Steuergerät 15 umfasst einen Timer zur Messung der Zeit.

In nicht näher dargestellter Weise kann der Tank 6 ein Überdruck- und/oder Unterdruckventil im oberen Bereich umfassen, so dass ein Druckausgleich innerhalb vorgegebener Grenzen erfolgen kann, z.B. zwischen 2 bar Überdruck und 20 mbar Unterdruck. Dies ist insbesondere deshalb vorteilhaft, da sich der Druck im Tank 6 beispielsweise bei Erwärmung bzw. Abkühlung aufgrund äußerer Temperaturänderungen und/oder Entnahme von HWL 5 relativ stark ändern kann und somit zu einer unerwünscht hohen Druckänderung führen könnte. Mit Hilfe dem entsprechenden Druckausgleich wird insbesondere ermöglicht, dass der Tank 6 nicht als Druckspeicher auszubilden ist. Dies gewährleistet eine wirtschaftlich günstige Ausführung des Tanks 6.

Diese Druckausgleichsöffnung bzw. das Ausgleichsventil ist in nicht näher dargestellter Weise mittels einer Verbindungsleitung mit dem Abgasstrang verbunden, so dass während bestimmter Betriebsphasen und Standzeiten insbesondere das Ammoniak zur Reduzierung der NOₓ-Emissionen in den Abgasstrom 1 eingeführt werden kann. Gegebenenfalls müssen die Schaltzeiten der Öffnungsvorgänge der Druckausgleichsöffnung ebenfalls an das Steuergerät weitergeleitet werden, damit eine-Rückrechnung des verminderten bzw. entwichenen Drucks bzw. Volumens auf die HWL-Konzentration möglich wird.

Gemäß Figur 1 umfasst der Tank 6 einen Füllstandsensor 17, so dass der Füllstand der HWL 5 im Tank 6 ermittelt werden kann. Hierdurch ist eine von der Entnahme der HWL 5 aus dem Tank 6 unabhängige Ermittlung des Füllstands realisierbar. Gegebenenfalls kann mittels dem Füllstandsensor 17 die Entnahmemenge ermittelt werden.

In nicht näher dargestellter Weise kann der Drucksensor 14 als Füllstandsensor 17 ausgebildet werden. Hierfür wird dieser im unteren Bereich bzw. im Bodenbereich des Tanks 6 angeordnet. Über einen entsprechenden Abgleich mit der Kennlinie des Steuergerätes 5 kann somit der Füllstand aufgrund des entsprechenden hydrostatischen Drucks der HWL 5 erfasst werden.

In nicht näher dargestellter Weise kann der Tank 6 wenigstens eine Heizeinheit bzw. eine Wärmetauschereinheit umfassen, so dass ein Einfrieren der HWL 5 bei Temperaturen kleiner -11° C verhindert werden kann.

Alternativ oder in Kombination hierzu kann der Tank 6 in nicht näher dargestellter Weise eine Umwälzeinheit zum Umwälzen der HWL 5 im Tank 6 zur Verhinderung des Einfrierens bei Temperaturen kleiner -11° C umfassen.

Gegebenenfalls können die in Figur 1 dargestellten HWL-Durchflussleitungen bzw. -Komponenten mit HWL 5 insbesondere elektrisch beheizbar ausgebildet werden.

Gemäß der Erfindung ist aufgrund der vergleichsweise genauen Kenntnis des Urea-Gehalts in der HWL 5 eine relativ exakte Dosierung der HWL 5 in den Abgasstrom 1 realisierbar. Hiermit wird gewährleistet, dass mittels einem Abgasstrom 19 weder ein unerwünscht hoher NOₓ-Ausstoß als auch ein unerwünschter Ammoniakschlupf in die Umwelt erfolgt.

Beispielsweise zur Überwachung bzw. Kontrolle der NOₓ-Reduzierung bzw. der Abgasbehandlung wird in Strömungsrichtung hinter dem SCR-Katalysator 3 optional ein Abgassensor 20 zur Ermittlung von NOₓ bzw. Ammoniak und/oder ein Temperatursensor 21 vorgesehen.

Insbesondere alle Sensoren 14, 16, 17, 20, 21 als auch die Ventile 8, 9, 13 sind mit dem Steuergerät 15 zur Datenübermittlung elektrisch verbunden. Darüber hinaus ist die Pumpe 7 sowie das nicht näher dargestellte Druckausgleichsventil des Tanks 6 ebenfalls mit dem Steuergerät zur Steuerung bzw. Regelung verbunden. In vorteilhafter Weise ist ein sogenanntes Daten-Bus-System, wie z.B. ein CAN-Bus oder dergleichen, zur vorteilhaften Betriebsweise der Abgasbehandlungseinheit und/oder des entsprechenden Fahrzeugs vorgesehen.

## Patentansprüche

1. Messvorrichtung zur Ermittlung einer Konzentration einer Harnstoff-Wasser-Lösung (5) in einer Speichereinheit (6) mit einer elektronischen Auswerteeinheit (15), **dadurch gekennzeichnet, dass** die Speichereinheit (6) wenigstens einen Drucksensor (14) zur Ermittlung eines Drucks umfasst.

2. Messvorrichtung nach Anspruch 1, **dadurch gekennzeichnet, dass** die Speichereinheit (6) wenigstens einen Temperatursensor (16) zur Ermittlung einer Temperatur umfasst.

3. Messvorrichtung nach einem der vorgenannten Ansprüche, **dadurch gekennzeichnet, dass** die Auswerteeinheit (15) wenigstens ein Zeitmesselement zur Ermittlung der Zeit umfasst.

4. Messvorrichtung nach einem der vorgenannten Ansprüche, **dadurch gekennzeichnet, dass** die Auswerteeinheit (15) wenigstens eine elektronisch abgespeicherte Kennlinie von Temperatur-, Druck- und/oder Zeitparametern aufweist.

5. Messvorrichtung nach einem der vorgenannten Ansprüche, **dadurch gekennzeichnet, dass** die Auswerteeinheit (15) wenigstens ein an einem Ausströmelement der Speichereinheit (6) angeordnetes Volumenmesselement (9) zur Volumenmessung der aus der Speichereinheit (6) entfernten Harnstoff-Wasser-Lösung (5) umfasst.

6. Messvorrichtung nach einem der vorgenannten Ansprüche, **dadurch gekennzeichnet, dass** die Speichereinheit (6) wenigstens eine regelbare, verschließbare Öffnung zum Druckausgleich aufweist.

7. Messvorrichtung nach einem der vorgenannten Ansprüche, **dadurch gekennzeichnet, dass** das Zeitmesselement wenigstens eine Dauer einer Öffnungsphase der Öffnung ermittelt.

8. Messvorrichtung nach einem der vorgenannten Ansprüche, **dadurch gekennzeichnet, dass** die Öffnung wenigstens ein Überdruck- und/oder Unterdruck-Ventil umfasst.

9. Messvorrichtung nach einem der vorgenannten Ansprüche,
**dadurch gekennzeichnet, dass** die Speichereinheit (6) wenigstens einen Füllstandsensor (17) zur Ermittlung einer Füllhöhe aufweist.

10. Messvorrichtung nach einem der vorgenannten Ansprüche, **dadurch gekennzeichnet, dass** wenigstens der Drucksensor (14) als Füllstandsensor (17) ausgebildet ist.

11. Abgasbehandlungseinheit zur Umsetzung, insbesondere zur Reduzierung von Stickoxidverbindungen, eines Abgasstromes (1) einer Verbrennungseinrichtung, insbesondere einer DieselBrennkraftmaschine, mit einer Speichereinheit (6) zur Speicherung einer Harnstoff-Wasser-Lösung (5) und einer Dosiereinheit (7, 8, 9, 10, 11, 12, 13, 15) zur Dosierung der Harnstoff-Wasser-Lösung (5) in den Abgasstrom (1), **dadurch gekennzeichnet, dass** wenigstens eine Messvorrichtung zur Ermittlung einer Konzentration der Harnstoff-Wasser-Lösung (5) in der Speichereinheit (6) mit einer elektronischen Auswerteeinheit (15) vorgesehen ist.

12. Abgasbehandlungseinheit nach Anspruch 11, **dadurch gekennzeichnet, dass** die Messvorrichtung nach einem der vorgenannten Ansprüche ausgebildet ist.

13. Abgasbehandlungseinheit nach einem der vorgenannten Ansprüche, **dadurch gekennzeichnet, dass** wenigstens an einer regelbaren, verschließbaren Öffnung der Speichereinheit (6) ein Durchströmelement zum Zuführen eines gasförmigen Fluids zum Abgasstrom (1) angeordnet ist.

14. Fahrzeug mit einer Abgasbehandlungseinheit zur Umsetzung, insbesondere zur Reduzierung von Stickoxidverbindungen, eines Abgasstromes (1) einer Verbrennungseinrichtung, insbesondere einer DieselBrennkraftmaschine, **dadurch gekennzeichnet, dass** die Abgasbehandlungseinheit nach einem der vorgenannten Ansprüche ausgebildet ist.

15. Verfahren zur Ermittlung einer Konzentration einer Harnstoff-Wasser-Lösung (5) in einer Speichereinheit (6) mit einer elektronischen Auswerteeinheit (15), **dadurch gekennzeichnet, dass** wenigstens eine Messvorrichtung nach einem der vorgenannten Ansprüche verwendet wird.
